Europäisches Patentamt

European Patent Office

Office européen des brevets

(11) Veröffentlichungsnummer: **0 317 722**
**A2**

(12) **EUROPÄISCHE PATENTANMELDUNG**

(21) Anmeldenummer: 88115224.3

(22) Anmeldetag: 16.09.88

(51) Int. Cl.4: **H01S 3/03 , H01J 61/02**

Die Bezeichnung der Erfindung wurde geändert (Richtlinien für die Prüfung im EPA, A-III, 7.3).

(30) Priorität: 28.09.87 DE 3732638

(43) Veröffentlichungstag der Anmeldung:
**31.05.89 Patentblatt 89/22**

(84) Benannte Vertragsstaaten:
**BE DE ES FR GB IT**

(71) Anmelder: **Siemens Aktiengesellschaft Berlin und München**
**Wittelsbacherplatz 2**
**D-8000 München 2(DE)**

(72) Erfinder: **Krüger, Hans**
**Peralohstrasse 13**
**D-8000 München 83(DE)**
Erfinder: **Lamprecht, Herbert, Dr.**

**Verstorben(DE)**
Erfinder: **Tiemann, Wilhelm, Dr.**
**Fasanenweg 11**
**D-8526 Bubenreuth(DE)**

(54) **Gaslaser-Anordnung mit einer Entladungsröhre.**

(57) Eine Gaslaser-Anordnung, insbesondere ein Argon-Ionenlaser, enthält eine Entladungsröhre, die zwischen einer Kathode und einer Anode angeordnet ist und die mit einem zentralen Entladungskanal und wenigstens einem Gasrückführungskanal versehen ist. Erfindungsgemäß ist den Öffnungen der Gasrückführungskanäle (8) wenigstens im Kathodenraum (1), vorzugsweise auch im Anodenraum (10), eine Sperrelektrode (18 bzw. 19) zugeordnet, die an eine Sperrspannung angeschlossen ist. In dieser Ausführungsform des Gaslasers sind Fehlzündungen durch die Gasrückführungskanäle praktisch ausgeschlossen.

FIG 4

## Gaslaser-Anordnung

Die Erfindung bezieht sich auf eine Gaslaser-Anordnung mit einer Entladungsröhre, die zwischen einer Kathode und einer Anode angeordnet ist und die mit einem Entladungskanal und wenigstens einem Gasrückführungskanal versehen ist.

Gaslaser, insbesondere Argon-Ionenlaser, mit einer Ausgangsleistung bis zu mehreren Watt im sichtbaren Bereich sind bekanntlich als Lichtquellen für wissenschaftliche und industrielle Anwendungen, beispielsweise für die Spektroskopie, Holographie und zerstörungsfreie Werkstoffprüfung sowie zur Augen- und Hautchirurgie, geeignet. Zwischen einer Kathode und einer Anode wird im Entladungskanal einer Entladungsröhre, die aus elektrisch isolierendem Material, beispielsweise Keramik wie Berylliumoxid BeO, Aluminiumnitrid AlN oder Aluminiumoxid $Al_2O_3$ oder auch aus einer Metallscheiben-Isolierstoff-Kaskade bestehen kann, eine Gasentladung gezündet. Der Gasentladungskanal besteht aus einer Kapillarbohrung, deren Durchmesser im allgemeinen 2 mm nicht wesentlich überschreitet. Zum Druckausgleich ist eine Gasrückführung vorgesehen, die aus einem internen oder externen Verbindungskanal zwischen dem Anodenraum und dem Kathodenraum besteht.

In einer bekannten Ausführungsform für verhältnismäßig geringe Leistung kann als Entladungsröhre beispielsweise ein Keramikrohr vorgesehen sein, das zur Wärmeabführung mit metallischen Kühlrippen versehen ist. In einer sogenannten Stapelbauweise kann die Entladungsröhre auch aus Keramikringen und metallischen Kühlscheiben bestehen, die jeweils mit einer zentralen Bohrung versehen sind und derart abwechselnd aufeinandergesta pelt sind, daß ihre koaxialen Bohrungen den Entladungskanal bilden. Eine interne Gasrückführung erhält man dadurch, daß vorzugsweise mehrere Gasrückführungskanäle parallel zum Entladungskanal in der Entladungsröhre angeordnet sind (US-Patent 3 753 144).

In einer weiteren Ausführungsform eines Gaslasers für höhere Leistung kann der Kathodenraum, der Entladungskanal und der Anodenraum von einer gemeinsamen Entladungsröhre mit einer verhältnismäßig dünnen Wandung aus Keramik umgeben sein, die mit einer Wasserkühlung versehen ist. Der Entladungskanal wird gebildet aus einer größeren Anzahl von topfförmigen Metallelementen, die jeweils mit einer zentralen Bohrung versehen sind und in der Entladungsröhre hintereinander angeordnet sind. Die Bohrungen bilden gemeinsam den zentralen Entladungskanal und sind jeweils von hohlzylindrischen Ansätzen umgeben. In der Umgebung der Bohrung besteht ein Teil des Bodens der Metallelemente aus einem sputterresistenten Material, beispielsweise Wolfram. Zur Gasrückführung sind die Metallelemente in ihrem Randbereich mit Bohrungen versehen. In ihrem äußeren Randbereich sind die Metallelemente mit der Innenwand der Entladungsröhre verlötet (US-Patent 4 378 600).

Der Erfindung liegt die Aufgabe zugrunde, das Zündverhalten von Gaslasern, insbesondere von Argon- oder Krypton-Ionenlasern, zu verbessern, insbesondere sollen Fehlzündungen durch die Gasrückführungskanäle oder das Versagen der Zündung weitgehend vermieden werden. Die Lebensdauer der Gaslaser-Anordnung soll somit nicht durch Zündprobleme begrenzt sein.

Die Erfindung beruht nun auf der Erkenntnis, daß in der verhältnismäßig engen und langen Bohrung des Entladungskanals in der Aufbauphase der Entladung Ladungsträger durch Wandstöße verloren gehen können. Dadurch wird die Zündung der sich aufbauenden Entladung erschwert. Insbesondere kann sich nach ver hältnismäßig langer Betriebsdauer der Gaslaser-Anordnung der Entladungskanal unter dem Einfluß des Lichtbogens verändern, beispielsweise kann die Wandung der Bohrung durch Ionen-Sputtervorgänge erodieren oder es können sich auf ihr Verunreinigungszonen bilden, die wenigstens teilweise aus Metallisierungen bestehen können. Diese Vorgänge können dazu führen, daß die Entladung nicht mehr zündet oder daß Fehlzündungen durch die Gasrückführungskanäle hindurch auftreten. Dazu kann nach langer Betriebsdauer auch eine Alterung der Kathode sowie eine mögliche Gaskontamination beitragen.

Die Lösung der genannten Aufgabe erfolgt nun erfindungsgemäß mit den Gestaltungsmerkmalen des Anspruchs 1. Damit erhält man eine potentialmäßige Sperrung des Durchgriffs der Anoden-Zündspannung durch die Gasrückführungskanäle. Die Sperrelektrode wird vorzugsweise über einen Widerstand, der auch ein kapazitiver Widerstand oder eine ohmisch-kapazitive Widerstandskombination sein kann, mit einer Sperrspannungsquelle verbunden. Eine besonders einfache Ausführungsform der Gaslaser-Anordnung erhält man dadurch daß die Sperrelektrode über eine hochohmige elektrisch leitende Verbindung an die Anode angeschlossen wird und damit die Anodenspannung zugleich als Sperrspannung dient.

In einer besonders vorteilhaften weiteren Ausführungsform können auch die Öffnungen der Gasrückführungskanäle im Anodenraum mit einer zusätzlichen Sperrelektrode versehen sein.

Zur weiteren Erläuterung der Erfindung wird auf die Zeichnung Bezug genommen, in deren Figur 1 eine Gaslaser-Anordnung gemäß der Erfindung mit einer besonderen Sperrelektrode im Kathodenraum schematisch veranschaulicht ist. In Figur 2 ist eine besondere Gestaltung der Sperrelektrode dargestellt. Figur 3 zeigt die Verwendung des Anodenpotentials als Sperrspannung.

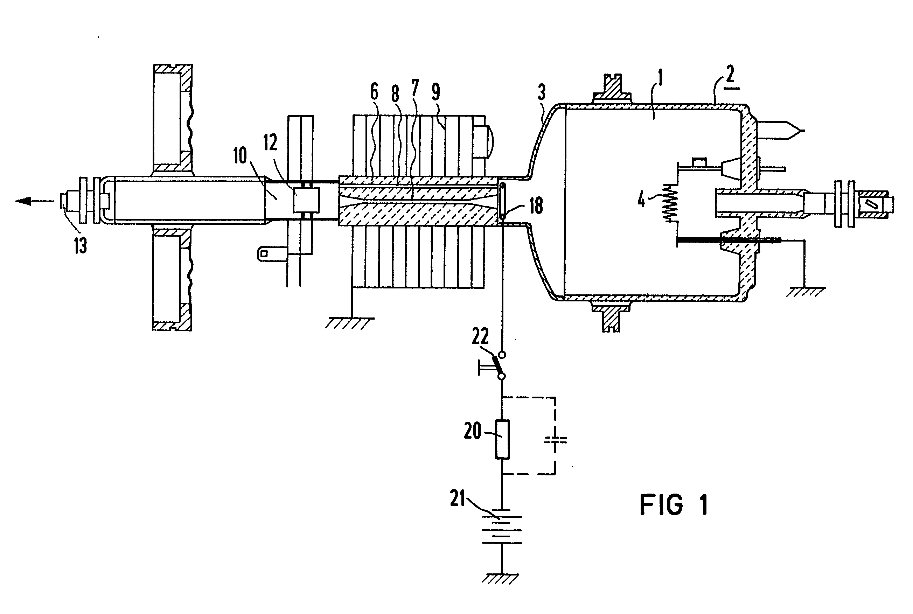

In der Ausführungsform gemäß Figur 1 ist ein Kathodenraum 1 von einem Kathodengehäuse 2 umgeben, das teilweise aus Glas oder Keramik besteht und mit einem metallischen Flansch 3 versehen ist. Der Kathodenraum 1 enthält eine Kathode 4, die als Heizwendel ausgeführt sein kann. Der Flansch 3 ist mit einer Entladungsröhre 6 verbunden, die vorzugsweise aus Keramik, beispielsweise Berylliumoxid BeO, bestehen kann und mit einer zentralen Bohrung versehen ist, die als Entladungskanal 7 dient. Die Entladungsröhre 6 ist mit wenigstens einem, vorzugsweise mehreren Gasrückführungskanälen versehen, von denen in der Figur nur einer dargestellt und mit 8 bezeichnet ist. Zur Wärmeabführung kann die Entladungsröhre 6 noch mit metallischen Kühlrippen 9 versehen sein. Ein Anodenraum 10 enthält eine Anode 12, die von einem metallischen Gehäuse umgeben ist und zur Wärmeabführung ebenfalls mit nicht näher bezeichneten Kühlrippen versehen sein kann.

Zur Zündung der Gasentladung wird zunächst die Kathode 4 vorgeheizt. Sobald sie ihre Betriebstemperatur, beispielsweise etwa 1050°C, erreicht hat, wird von einer in der Figur nicht dargestellten Zündspannungsquelle kurzzeitig ein Zündimpuls, beispielsweise etwa 2 bis 5 kV, an die Anode 12 gelegt und damit eine Lichtbogenentladung eingeleitet, die mit einem Plasmastrom von einigen Ampere bis zu einigen 10 Ampere von der Kathode 4 zur Anode 12 durch den engen Entladungskanal 7 der Entladungsröhre 6 hindurchbrennt. Die Gasrückführungskanäle 8 dienen dazu, den Druck zwischen Kathodenraum 1 und Anodenraum 10 auszugleichen. Durch die Lichtbogenentladung hoher Stromdichte im Entladungskanal 7 wird das Füllgas, beispielsweise ein Edelgas oder eine Gasmischung, vorzugsweise Argon oder Krypton, mit einem Druck von etwa 1 Torr zur Laseraktivität angeregt. Der erzeugte Laserstrahl verläßt das System durch einen Auskoppel-Spiegel 13, wie es in der Figur durch einen nicht näher bezeichneten Pfeil angedeutet ist.

Gemäß der Erfindung ist wenigstens den Öffnungen der Gasrückführungskanäle 8 im Kathodenraum 1 eine Sperrelektrode 18 zugeordnet, die über einen hochohmigen Widerstand 20 an eine Sperrspannungsquelle 21 angeschlossen ist. Anstelle des hochohmigen Widerstands 20 kann auch ein in der Figur nicht näher bezeichneter kapazitiver Widerstand oder eine ohmisch-kapazitive Widerstandskombination vorgesehen sein, wie es in der Figur gestrichelt angedeutet ist. Zum Anlegen der Sperrspannung an die Sperrelektrode 18 kann beispielsweise ein Schalter 22 vorgesehen sein, der vorzugsweise ein elektronischer Schalter sein kann und in der Figur zur Vereinfachung lediglich als handbetätigter Taster dargestellt ist. Über den Schalter 22 wird das Sperrpotential der Sperrspannungsquelle 21, die einseitig mit Massepotential verbunden ist, an die Sperrelektrode 18 gelegt. Um eine reine Potentialsteuerung zu erhalten, ist die Zündung einer selbständigen Entladung zur Sperrelektrode 18 hin zu vermeiden; der Wert des Widerstands 20 ist dementsprechend hoch zu bemessen. Die Sperrelektrode 18 ist so gestaltet und so angebracht, daß zwar der Durchgriff der Anodenzündspannung durch die Gasrückführungskanäle 8 wirksam gesperrt wird, eine Störung der Gasrückströmung aus den Öffnungen der Gasrückführungskanäle 8 in den Kathodenraum 1 jedoch vermieden wird. Dabei wird der Durchgriff durch den zentralen Entladungskanal 7 nicht behindert.

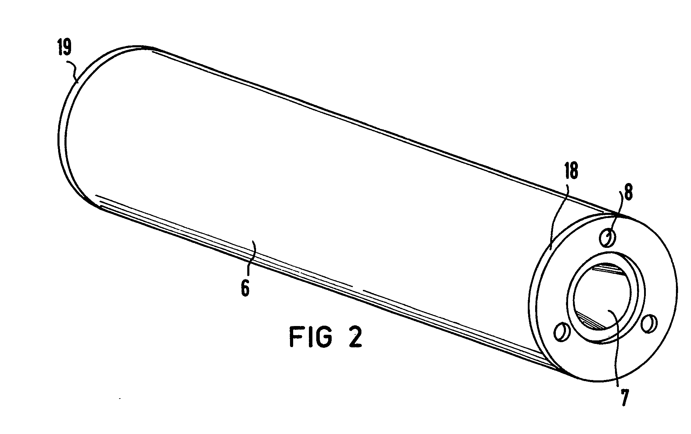

In einer bevorzugten Ausführungsform kann die Sperrelektrode 18 gemäß Figur 2 als ringscheibenförmige Metallelektrode ausgeführt sein, die etwa den äußeren Rand der Stirnfläche der Entladungsröhre 6 bedeckt und mit entsprechenden Öffnungen für die Gasrückführungskanäle 8 versehen ist. In dieser Ausführungsform kann die Sperrelektrode 18 zweckmäßig auf die Stirnfläche der Entladungsröhre 6 aufgedampft oder aufgesputtert sein.

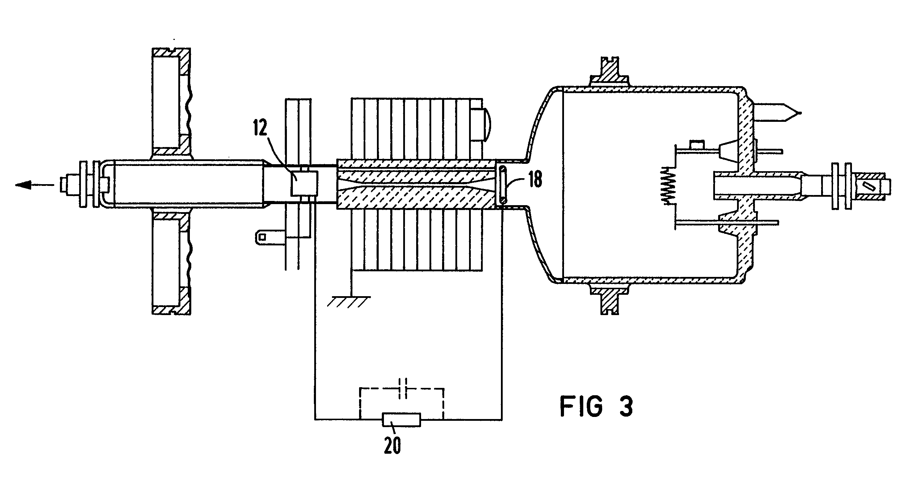

Eine vereinfachte Ausführungsform der Gaslaser-Anordnung ergibt sich gemäß Figur 3 dadurch, daß das Anodenpotential als Sperrspannungsquelle verwendet wird, indem die Sperrelektrode 18 über den Widerstand 20 von vorzugsweise mindestens 5 Megohm elektrisch leitend mit dem Anodengehäuse oder auch direkt mit der Anode 12 verbunden wird. In dieser Ausführungsform ist eine besondere Sperrspannungsquelle überflüssig.

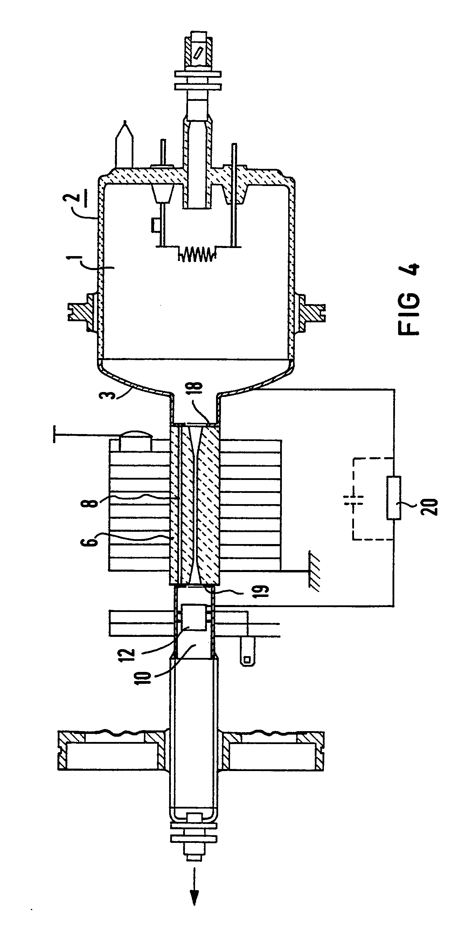

In einer besonders vorteilhaften Ausführungsform gemäß Figur 4 kann nicht nur die dem Kathodenraum 1, sondern auch die dem Anodenraum 10 zugewandte Stirnfläche der Entladungsröhre 6 mit einer ringscheibenförmigen Sperrelektrode 19 versehen sein, die den Rand der Stirnfläche der Entladungsröhre 6 bedeckt und mit Öffnungen für die Gasrückführungskanäle 8 versehen ist. Diese Sperrelektrode 19 ist vorzugsweise über das Anodengehäuse mit der Anode 12 elektrisch leitend verbunden. Die Sperrelektrode 19 kann auch aus einem flanschartigen Ansatz des Anodengehäuses bestehen, welcher mit der Entladungsröhre 6 verbunden, beispielsweise verlötet, ist.

Wird in einer weiteren Ausführungsform ein elektrisch leitender Teil des Kathodengehäuses, beispielsweise der Flansch 3, mit der Sperrelektrode 18 elektrisch leitend verbunden, so genügt es, wenn dieser Flansch 3 über den Widerstand 20 auf Anodenpotential gelegt wird.

Eine weitere vorteilhafte Ausführungsform der Gaslaser-Anordnung gemäß der Erfindung mit einer Entladungsröhre, die wenigstens teilweise aus einem Isolierstoffkörper besteht, besteht darin, daß die Kühlrippen 9 elektrisch leitend miteinander verbunden sind und auf Massepotential liegen, wie es in den Figuren 1, 3 und 4 dargestellt ist. Durch diese Maßnahmen werden die elektrischen Feldlinien im Bereich der Gasrückführungskanäle 8 umgelenkt in Richtung auf den Kühlkörper. Durch diese Umlenkung können die Ladungsträger nicht mehr in Richtung der Kathode beschleunigt werden. Eine Zündung der Entladung durch die Gasrückführungskanäle 8 hindurch wird somit sowohl zusätzlich zu den beschriebenen Gestaltungsmerkmalen als auch unabhängig davon vermieden.

**Ansprüche**

1. Gaslaser-Anordnung mit einer Entladungsröhre, die zwischen einer Kathode und einer Anode angeordnet ist und die mit einem Entladungskanal und wenigstens einem Gasrückführungskanal versehen ist, **dadurch gekennzeichnet,** daß den Öffnungen der Gasrückführungskanäle (8) im Kathodenraum (1) eine Sperrelektrode (18) zugeordnet ist, die an eine Sperrspannung angeschlossen ist (Figur 1).

2. Gaslaser-Anordnung nach Anspruch 1, **dadurch gekennzeichnet,** daß die Sperrelektrode (18) über einen Widerstand (20) mit einer Sperrspannungsquelle (21) verbunden ist.

3. Gaslaser-Anordnung nach Anspruch 1 oder 2, **gekennzeichnet durch** eine Ausführungsform der Sperrelektrode (18) als Ringscheibe, die auf der Stirnfläche der Entladungsröhre (6) angeordnet ist und mit Öffnungen für die Gasrückführungskanäle (8) versehen ist (Figur 2).

4. Gaslaser-Anordnung nach einem der Ansprüche 1 bis 3, **dadurch gekennzeichnet,** daß das Potential der Anode (12) zur Bildung der Sperrspannung vorgesehen ist (Figur 3).

5. Gaslaser-Anordnung nach einem der Ansprüche 1 bis 6, **dadurch gekennzeichnet,** daß die Sperrelektrode (18) mit einem Metallteil (3) des Kathodengehäuses (2) und der Anode (12) elektrisch leitend verbunden ist.

6. Gaslaser-Anordnung nach einem der Ansprüche 1 bis 5, **dadurch gekennzeichnet,** daß auch die Öffnungen der Gasrückführungskanäle (8) im Anodenraum (10) mit einer Sperrelektrode (19) versehen sind, die mit der Anode (12) elektrisch leitend verbunden ist (Figur 4).

7. Gaslaser-Anordnung nach einem der Ansprüche 1 bis 6, **dadurch gekennzeichnet,** daß ein kapazitiver Widerstand vorgesehen ist.

8. Gaslaser-Anordnung nach einem der Ansprüche 1 bis 7, **dadurch gekennzeichnet,** daß ein ohmscher und ein kapazitiver Widerstand vorgesehen sind.

9. Gaslaser-Anordnung mit einer Entladungsröhre, die wenigstens teilweise aus einem Isolierstoffkörper besteht, der mit Kühlrippen versehen ist, und die zwischen einer Kathode und einer Anode angeordnet ist und die mit einem Entladungskanal und wenigstens einem Gasrückführungskanal versehen ist, insbesondere nach einem der Ansprüche 1 bis 8, **dadurch gekennzeichnet,** daß die Kühlrippen (9) elektrisch leitend miteinander verbunden sind und auf Massepotential liegen.

FIG 1

EP 0 317 722 A2

FIG 2

FIG 3

12

18

20

EP 0 317 722 A2

FIG 4

EP 0 317 722 A2